# EUROPÄISCHE PATENTSCHRIFT

(11) **EP 2 667 602 B1**
(45) Veröffentlichungstag und Bekanntmachung des Hinweises auf die Patenterteilung: **24.10.2018**
(21) Anmeldenummer: 13002051.4
(22) Anmeldetag: 18.04.2013
(51) Int. Cl.: H04N 7/18, G07C 9/00

(54) **Haus-Kommunikationssystem mit mindestens einer Türstation und einer Vielzahl von Wohnungsstationen**
Building communication system with at least one door station and a number of residence stations
Système de communication interne doté d'au moins une station de porte et de plusieurs stations d'habitation

(30) Priorität: 22.05.2012 DE 102012010018
(43) Veröffentlichungstag der Anmeldung: 27.11.2013
(73) Patentinhaber: ABB AG, 68309 Mannheim (DE)
(72) Erfinder: Dörstel, Bernhard, 50321 Brühl (DE); Krummel, Holger, 58515 Lüdenscheid (DE); Zierach, Falk, 58513 Lüdenscheid (DE)

(56) Entgegenhaltungen:
- EP-A1- 2 448 233
- WO-A1-02/35479
- US-A1- 2006 225 140
- US-A1- 2007 268 365

## Beschreibung

Die Erfindung betrifft ein Haus-Kommunikationssystem mit mindestens einer Türstation und einer Vielzahl von Wohnungsstationen.

Aus der DE 10 2007 059 934 B4 ist ein Hauskommunikationssystem mit einer ein Display mit berührungssensitiver Oberfläche aufweisenden Türstation bekannt, wobei ein Nahbereich-Sensor vorgesehen ist, welcher das Display bei Detektion einer Person innerhalb eines vorgegebenen Nahbereichs in einen Betriebszustand schaltet, bei welchem das Display die Namen der Hausbewohner inklusive den Namen zugeordnete, jeweils Türklingelknöpfe darstellende aktive Schaltflächen anzeigt.

Aus der DE 10 2007 038 804 A1 ist ein Anzeige- und Bediengerät der Gebäudesystemtechnik bekannt, bei welchem ein Referenzspeicher vorgesehen ist, in welchem Referenzbilder unterschiedlicher Personen respektive Benutzer des Anzeige- und Bediengeräts abgespeichert sind. Eine Kamera erfasst eine sich dem Anzeige- und Bediengerät nähernde Person. Es ist eine Bildvergleichsvorrichtung vorgesehen, welcher Bildsignale der Kamera und Bildsignale des Referenzspeichers zugeführt sind und welche eine Koinzidenz-Auswertung dieser Bildsignale durchführt. Es ist ein Speicher vorgesehen, in welchem individuelle, benutzerabhängige Menü-Oberflächen abgespeichert sind und welcher ausgangsseitig mit einem Bildschirm verbunden ist. Die Bildvergleichseinrichtung beaufschlagt den Speicher entsprechend dem Ergebnis der Bildsignal-Auswertung, um die der erkannten Person zugeordnete Menü-Oberfläche auf dem Bildschirm zur Darstellung zu bringen.

Aus der EP 2 448 233 A1 ist eine Türstation eines Haus-Kommunikationssystems mit einer Vielzahl von Wohnungsstationen bekannt, wobei die Türstation ein Anzeige-/Betätigungsfeld mit Klingelknöpfen und mit Namen oder Namensschildern oder Bezeichnungen, insbesondere Ziffern, für die Zuordnung zu einer bestimmten Wohnung mit bestimmter Wohnungsstation des Hauses aufweist, wobei die Türstation ein Mikrofon inklusive Sprachverarbeitung, einen Referenzspeicher zur Abspeicherung aller Namen der Bewohner sowie eine mit Mikrofon und Referenzspeicher verbundene Verarbeitungs-/Ansteuereinheit inklusive Namenvergleichseinrichtung aufweist.

Aus der GB 2 435 979 A ist eine Sprechanlage bekannt, welche gleichzeitig auch die Funktion eines Sicherheitssystems ausübt. Eine Kamera nimmt Bilder von allen Personen auf, welche eine Sprechtaste / Klingeltaste betätigen oder welche sich in einem Eingangsbereich eines Gebäudes bewegen und diese Bilder werden abgespeichert. Gleichzeitig wird auch die Beleuchtung des Eingangsbereichs und / oder der Sprechtaste / Klingeltaste aktiviert. Bei Betätigung der Taste wird eine Sprechverbindung zu einem entfernten Telefon oder einer entfernten Station aktiviert. Die aufgenommenen Bilder können zu einem späteren Zeitpunkt angesehen werden, falls dies erforderlich ist.

In der US 2006/0225140 ist ein Sicherheitssystem beschrieben, bei dem beispielsweise ein Türöffner mittels biometrischer Daten betätigbar ist.

Der Erfindung liegt die Aufgabe zugrunde, ein Haus-Kommunikationssystem mit mindestens einer Türstation und einer Vielzahl von Wohnungsstationen anzugeben, bei welcher einem Besucher in optimierter Form der mutmaßlich zu besuchende Hausbewohner angezeigt wird.

Diese Aufgabe wird erfindungsgemäß gelöst durch ein Haus-Kommunikationssystem mit den Merkmalen des Anspruchs 1.

Die mit der Erfindung erzielbaren Vorteile bestehen insbesondere darin, dass es aufgrund des adaptives Verhaltens des Haus-Kommunikationssystems durch Verknüpfung von Bildinformationen mit jeweils zugeordneten und abgespeicherten Scrollinformationen dem Besucher sehr erleichtert wird, aus der Vielzahl der Hausbewohner eines Gebäudes den richtigen Hausbewohner in einfacher und schneller Art und Weise auszuwählen.

In weiterer Ausgestaltung weisen die Wohnungsstationen ein Telefonsystem-Interface für die Kommunikation mit einem Telefonsystem auf und die Handlungsinformationen führen im Falle der Abwesenheit des Hausbewohners zum automatischen Einrichten einer Kommunikationsverbindung zwischen der Türstation und einem Mobiltelefon des Hausbewohners. Auf diese Weise ist eine Kommunikation zwischen Besucher und abwesendem Hausbewohner möglich.

Dabei umfasst die Bildverarbeitung der Kamera neben der Gesichtserkennung vorteilhaft auch die Gegenstandserkennung, so dass z. B. auch Nummernschilder von Kraftfahrzeugen erkannt werden können, woraufhin festgelegte Handlungen veranlasst werden.

Die Erfindung wird nachstehend an Hand der in der Zeichnung dargestellten Ausführungsbeispiele erläutert.

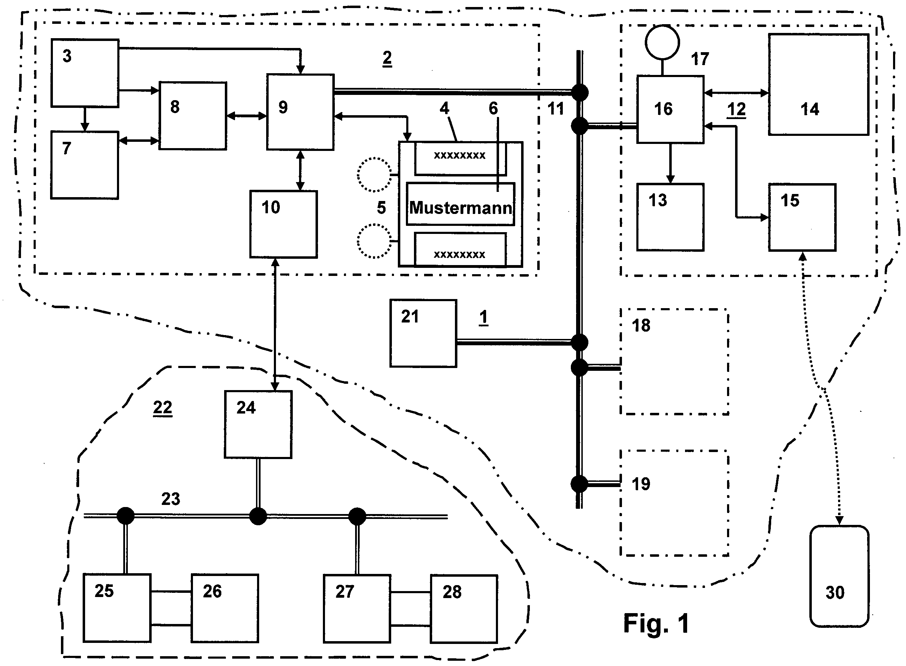

In Fig. 1 ist ein Haus-Kommunikationssystem 1 gezeigt, welches mindestens eine Türstation 2 (Außenstation), eine Vielzahl - hier z. B. drei - Wohnungsstationen 12, 18, 19 (Innenstationen) sowie mindestens einen Türöffner 21 aufweist, wobei diese Stationen / Komponenten 2, 12, 18, 19, 21 an einen Türkommunikations-Bus 11 angeschlossen sind und optional mit einem Gebäudesystemtechnik-Bus 23 einer Gebäudesystemtechnik 22 und / oder mit einem Telefonsystem verbindbar sind.

Die Türstation 1 weist folgende Komponenten auf:
- eine Kamera 3 inklusive einer Bildbearbeitung, welche insbesondere zur Gesichtserkennung von Personen geeignet ist,
- ein Scroll-Display 4 mit bildlauffähiger, grafischer Benutzeroberfläche, wobei durch Scrollen eine Liste 6 mit den Namen der Hausbewohner B respektive mit den Wohnungen zugeordneten Ziffern respektive mit den Wohnungen zugeordneten Bezeichnungen sukzessive und in gewünschter Art und Weise abschnittsweise abgearbeitet und angezeigt werden kann,
- optional mindestens einen Bedienknopf 5 zum Scrollen der Benutzeroberfläche des Scroll-Displays 4 und zum Anwählen aufzurufender / anzuzeigender Inhalte (Namen, Ziffern, Bezeichnungen),
- einen Referenzspeicher 7 für abgespeicherte Bildinformationen und hiermit jeweils verknüpfte Scrollinformationen und Handlungsinformationen,
- eine Bildvergleichseinrichtung 8,
- eine Auswerte-/Verarbeitungs-/Ansteuereinheit 9 inklusive Speicher, welche mit dem Türkommunikationsbus 11 verbunden ist und zur Ansteuerung des Scroll-Displays 4 dient,
- optional ein an die Auswerte-/Verarbeitungs-/Ansteuereinheit 9 angeschlossenes Gebäudesystemtechnik-Interface 10 zum Anschluss an eine Gebäudesystemtechnik 22.

Die Wohnungsstation 12 sowie in gleicher Weise die weiteren Wohnungsstationen 18, 19 usw. weisen insbesondere folgende Komponenten auf:
- eine an den Türkommunikations-Bus 11 angeschlossene Auswerte-/Verarbeitungs-/Ansteuereinheit 16 inklusive Speicher,
- eine an die Auswerte-/Verarbeitungs-/Ansteuereinheit 16 angeschlossene Türklingel 13 (Tür-Gong),
- eine an die Auswerte-/Verarbeitungs-/Ansteuereinheit 16 angeschlossene Tür-öffner-Taste 17,
- optional ein an die Auswerte-/Verarbeitungs-/Ansteuereinheit 16 angeschlossenes Display 14,
- optional ein an die Auswerte-/Verarbeitungs-/Ansteuereinheit 16 angeschlossenes Telefonsystem-Interface 15 für die Kommunikation mit einem Telefonsystem.

Fig. 1 zeigt des Weiteren die vorstehend bereits erwähnte Gebäudesystemtechnik 22 mit dem Gebäudesystemtechnik-Bus 23, welcher über seine Zentraleinheit 24 mit dem Gebäudesystemtechnik-Interface 10 des Haus-Kommunikationssystems 1 verbunden ist und z. B. einen Aktor 25 mit daran angeschlossenem Garagentor-Antrieb 26 sowie einen Aktor 27 mit daran angeschlossener Hofbeleuchtung und/oder Gartenbeleuchtung und/ oder Wegebeleuchtung 28 aufweist. Selbstverständlich weist die Gebäudesystemtechnik 22 eine Vielzahl weiterer Geräte für Beleuchtungen, Jalousien, Heizung /Klimatisierung usw. auf.

Fig. 1 zeigt ferner ein Mobiltelefon 30, welches einem bestimmten Telefonsystem zugehörig ist und über das Telefonsystem-Interface 15 mit dem Haus-Kommunikationssystem 1 verbindbar ist.

Nachfolgend werden die funktionellen Eigenschaften des Haus-Kommunikationssystems 1 näher erläutert. Türstationen 2 mit Scroll-Display 4 kommen insbesondere dann zum Einsatz, wenn eine Vielzahl von Hausbewohnern B (Parteien) in einem Gebäude beheimatet ist, was mit herkömmlicher Technik mit einer Klingeltaste je Partei in nachteiliger Weise zu einer entsprechend hohen Anzahl von einzelnen Klingeltasten führen würde. Der Display-Inhalt des Scroll-Displays 4 ist zunächst für jeden Besucher (Benutzer) A gleich, d. h. jeder Besucher A muss stets dieselben Schritte durchführen, um einen bestimmten Bewohner zunächst anzuwählen und anschließend anzuklingeln: Der Besucher A muss am Scroll-Display 4 durch eine Liste von Bewohnern scrollen - gegebenenfalls unter Einsatz vorhandener Bedienknöpfe 5 - um denjenigen Hausbewohner B anwählen, den er anklingeln möchte. Dieser Schritt wird durch den erfindungsgemäßen Vorschlag wesentlich erleichtert.

Über die in der Türstation 2 integrierte Kamera 3 wird ein Bild eines Besuchers A aufgenommen und die dem Besucher A zugeordnete Bildinformation IA wird im Referenzspeicher 7 abgespeichert. Nachdem ein bestimmter Besucher A einen bestimmten Hausbewohner B angewählt hat, kann diese Scrollinformation IB mit der zugehörigen Bildinformation IA verknüpft und ebenfalls im Referenzspeicher 7 abgespeichert werden. Unter Scrollinformation wird IB wird derjenige spezielle Ausschnitt aus der Liste 6 verstanden, den der Besucher A ausgewählt hat und der im Scroll-Display 4 zur Anzeige gelangt. Dieser adaptive Vorgang wird unter Koordination der Auswerte-/Verarbeitungs-/Ansteuereinheit 9 durchgeführt.

Falls dieser bestimmte Besucher A zu einem späteren Zeitpunkt wiederkommt, kann er von der Türstation 2 durch Vergleich des aktuell von der Kamera 3 ermittelten Bildes mit der im Referenzspeicher 7 abgelegten Bildinformation IA unter Einsatz der Bildvergleichseinrichtung 8 und geeigneter Mittel der Gesichtserkennung erkannt werden. Aufgrund der mit der gespeicherten Bildinformation IA verknüpften und abgespeicherten Scrollinformation IB wird der Display-Inhalt derart angepasst, dass der bestimmte Hausbewohner B ausgewählt und im Scroll-Display 4 angezeigt wird. Durch dieses adaptive Verhalten des Haus-Türkommunikationssystems 1 wird dem Besucher A vorteilhaft das Scrollen durch das Scroll-Display 4 abgenommen.

Das Mittel der Gesichtserkennung kann darüber hinaus auch wie folgt eingesetzt werden: Über die in der Türstation 2 integrierte Kamera 3 wird ein Bild eines Besuchers A aufgenommen und diese Bildinformation IA wird im Referenzspeicher 7 abgespeichert. Diese Bildinformation IA wird mit der Handlungsinformation HB derjenigen Handlung verknüpft und abgespeichert, welche der angewählte und angeklingelte Bewohner B in der Vergangenheit durchgeführt hat, wie z. B.
- die Handlung bestand darin, dass der Hausbewohner B in der Vergangenheit die Türöffner-Taste 17 betätigt hat, wodurch der Türöffner 21 angesteuert worden ist, was zum Öffnen der Haustür / Eingangstür geführt hat oder
- die Handlung bestand darin, dass der Hausbewohner B die Tür-Öffner 21 die Türöffner-Taste 17 nicht betätigt hat, so dass der Türöffner 21 nicht angesteuert worden ist, d. h. der Besucher A wurde ignoriert bzw. abgewiesen und die Haustür blieb verschlossen, womit deutlich geworden ist, dass es sich um einen unerwünschten Besucher A gehandelt hat.

Die Handlungsinformation HB wird mit der zugehörigen Bildinformation IA verknüpft und ebenfalls im Referenzspeicher 7 abgespeichert.

Falls dieser bestimmte Besucher A zu einem späteren Zeitpunkt wiederkommt, kann er durch Vergleich des aktuell von der Kamera 3 ermittelten Bildes mit der im Referenzspeicher 7 abgelegten Bildinformation IA unter Einsatz der Bildvergleichseinrichtung 8 und geeigneter Mittel der Gesichtserkennung erkannt werden. Aufgrund der mit der gespeicherten Bildinformation IA verknüpften und abgespeicherten Handlungsinformation HB kann dem Hausbewohner B durch das Display 14 der Wohnungsstation 12 oder 18 oder 19 ein Vorschlag für eine auszuführende Handlung unterbreitet werden, wie zweckmäßig auf das Klingeln zu reagieren ist. Dementsprechend kann auf dem Display 14 der Wohnungsstation zur Anzeige gebracht werden, dass die Türöffner-Taste 17 betätigt werden sollte oder nicht betätigt werden sollte.

In weiterer Ausgestaltung des Haus-Kommunikationssystems 1 kann der Hausbewohner B auch veranlassen, dass die erlernte Reaktion, d. h. die Reaktion eines Hausbewohners B auf ein Klingeln durch einen Besucher A, durch das Haus-Kommunikationssystem 1 automatisch durchgeführt wird. Einige Beispiele hierzu:
- Das Klingeln eines unerwünschten Besuchers A löst automatisch ein Ansteuern der Türklingel 13 der zugeordneten Wohnungsstation 12, 18 oder 19 nicht aus, so dass der Hausbewohner B ungestört bleibt. Selbstverständlich wird der Tür-öffner 21 nicht angesteuert. Optional kann das Klingeln des unerwünschten Besuchers A im Display 14 angezeigt werden.
- Beim Klingeln der Pflegeperson als Besucher A eines bettlägerigen Hausbewohners B wird der Türöffner 21 automatisch angesteuert. Der bettlägerige Hausbewohner B hört zwar die Türklingel 13, muss jedoch vorteilhaft nichts unternehmen, um der Pflegeperson als Besucher A Zugang zur Wohnung zu gewähren.
- Falls der Paketbote / Postbote als Besucher A klingelt und der Hausbewohner B zur Zeit nicht zu Hause ist, baut die Auswerte-/Verarbeitungs-/Ansteuereinheit 16 über das Telefonsystem-Interface 15 automatisch eine Kommunikationsverbindung zum Mobiltelefon 30 des Hausbewohners B auf, damit dieser dem Paketboten / Postboten als Besucher A über die Türstation 2 mitteilen kann, wo das Paket abgegeben werden sollte.

In weiterer Ausgestaltung des Haus-Kommunikationssystems 1 können mit bestimmten Bildinformationen IA bestimmte Handlungsinformationen HB verknüpft und abgespeichert werden, die Auswirkungen auf Geräte der Gebäudesystemtechnik 22 haben, d. h. bei diesen Ausgestaltungen beaufschlagt die Auswerte-/Verarbeitungs-/Ansteuereinheit 9 das Gebäudesystemtechnik-Interface 10, welches wiederum mit der Zentraleinheit 24 der Gebäudesystemtechnik 22 in drahtgebundener oder drahtloser Form kommuniziert, wodurch eine Ansteuerung von an den Gebäudesystemtechnik-Bus 23 angeschlossenen Gebäudesystemtechnik-Geräten vom Haus-Kommunikationssystem her möglich ist. Dabei kann die auszuübende Funktion auch aus mehreren Einzelfunktionen bestehen. Nachstehend Beispiele für diese Ausgestaltung des Haus-Kommunikationssystems 1:
- Wird ein bestimmter Besucher A erkannt, führt die mit der relevanten Bildinformation IA verknüpfte und abgespeicherte Handlungsinformation HB zur Ansteuerung des Aktors 25, welcher über den Garagentor-Antrieb 26 das Garagentor öffnet, um dem Besucher A automatisch die Einfahrt in die Tiefgarage des Gebäudes zu ermöglichen. Vorteilhaft ist es nicht erforderlich, das Garagentor durch ein separates Gerät, wie eine Fernbedienung, zu öffnen oder zu schließen.
- Wird ein bestimmter Besucher A erkannt, führt die mit der relevanten Bildinformation IA verknüpfte und abgespeicherte Handlungsinformation HB zur Ansteuerung des Aktors 27, welcher daraufhin in der Nacht oder bei Dämmerung die Hofbeleuchtung / Gartenbeleuchtung / Wegebeleuchtung 28 einschaltet, um dem Besucher A den Zugang zum Gebäude in gewünschter und vorab festgelegter Art und Weise zu ermöglichen. Vorteilhaft ist eine Aktivierung / Deaktivierung der Hofbeleuchtung / Gartenbeleuchtung / Wegebeleuchtung 28 durch separate Lichtschalter nicht mehr erforderlich.

Diese durchgeführten Funktionen können optional am Display 14 der Wohnungsstation 12, 18 oder 19 zur Anzeige gebracht werden.

Optional kann die Bildverarbeitung der Kamera 3 derart erweitert werden, dass neben der Gesichtserkennung zusätzlich auch eine Gegenstandserkennung ermöglicht ist, so dass auf diese Weise z. B. Nummernschilder von Kraftfahrzeugen erkannt werden können, was insbesondere bei Türstationen 2 respektive Außenstationen sinnvoll ist, welche dem öffentlichen Verkehrsraum oder einer Garageneinfahrt zugewandt angeordnet sind. Insbesondere können Nummernschilder als Bildinformation IA herangezogen werden. Auf diese Weise kann das Nummernschild eines auf die Hofeinfahrt des Gebäudes fahrenden Kraftfahrzeuges erkannt werden, was bei mit der Bildinformation IA verknüpften und abgespeicherten Handlungsinformationen HB dazu führt, dass das Garagentor automatisch geöffnet wird und im Bedarfsfall (in der Nacht oder bei Dämmerung) die Hofbeleuchtung eingeschaltet werden. In gleicher Art und Weise werden das Garagentor automatisch geschlossen und im Bedarfsfall die Hofbeleuchtung ausgeschaltet, sobald das aus der Garage fahrende Kraftfahrzeug die Hofeinfahrt des Gebäudes verlässt und vorher das Nummernschild als Bildinformation IA vom Haus-Kommunikationssystem 1 erkannt worden ist.

### Bezuqszeichenliste

- 1: Haus-Kommunikationssystem
- 2: Türstation (Außenstation) des Haus-Kommunikationssystems
- 3: Kamera inklusive Bildverarbeitung
- 4: Scroll-Display mit bildlauffähiger, grafischer Benutzeroberfläche
- 5: optional Bedienknöpfe zum Scrollen und Anwählen
- 6: Liste mit Namen der Hausbewohner oder Ziffern oder Bezeichnungen
- 7: Referenzspeicher für abgespeicherte Bildinformation und hiermit verknüpfte Scrollinformation und Handlungsinformation
- 8: Bildvergleichseinrichtung
- 9: Auswerte-/Verarbeitungs-/Ansteuereinheit inklusive Speicher
- 10: Gebäudesystemtechnik-Interface
- 11: Türkommunikationssystem-Bus
- 12: Wohnungsstation (Innenstation)
- 13: Türklingel (Gong)
- 14: Display
- 15: Telefonsystem-Interface
- 16: Auswerte-/Verarbeitungs-/Ansteuereinheit inklusive Speicher
- 17: Türöffner-Taste
- 18: Wohnungsstation (Innenstation)
- 19: Wohnungsstation (Innenstation)
- 20: -
- 21: Türöffner
- 22: Gebäudesystemtechnik
- 23: Gebäudesystemtechnik-Bus
- 24: Zentraleinheit
- 25: Aktor
- 26: Garagentor-Antrieb
- 27: Aktor
- 28: Hofbeleuchtung / Gartenbeleuchtung / Wegebeleuchtung
- 29: -
- 30: Mobiltelefon

- A: Besucher
- B: Hausbewohner
- IA: Bildinformation
- IB: mit der Bildinformation verknüpfte und abgespeicherte Scrollinformation
- HB: mit der Bildinformation verknüpfte und abgespeicherte Handlungsinformation

## Patentansprüche

1. Haus-Kommunikationssystem (1) mit mindestens einer Türstation (2), mindestens einem Türöffner (21), einer Kamera (3) inklusive Bildverarbeitung zur Erfassung von Besuchern (A), einem Referenzspeicher (7) und einer Vielzahl von Wohnungsstationen (12, 18, 19), **dadurch gekennzeichnet, dass**
• die Türstation (2) ein Gebäudesystemtechnik-Interface (10) zum Anschluss an eine Gebäudesystemtechnik (22) über einen Gebäudesystemtechnik-Bus (23) aufweist,
• im Referenzspeicher (7) Bildinformationen (IA) von Besuchern (A) abgespeichert sind,
• die Türstation (1) eine mit Kamera (3) und Referenzspeicher (7) verbundene Auswerte-/Verarbeitungs-/Ansteuereinheit (9) inklusive Bildvergleichseinrichtung (8) und ein Scroll-Display (4) mit bildlauffähiger, grafischer Benutzeroberfläche aufweist, mit welchem aus einer Liste (6) aller Hausbewohner (B) ein bestimmter Hausbewohner gezielt auswählbar ist,
• im Referenzspeicher (4) die Verknüpfungen zwischen bestimmten Bildinformationen (IA) und bestimmten Wohnungsstationen (12, 18, 19) abgespeichert sind,
• mittels der Auswerte-/Verarbeitungs-/Ansteuereinheit (9) eine Koinzidenzauswertung zwischen einem aktuell von der Kamera (3) erfassten Bild und den Bildinformationen (IA) des Referenzspeichers (7) erfolgt,
• das Scroll-Display (4) bei einer festgestellten hinreichenden Übereinstimmung zwischen einer bestimmten Bildinformation (IA) und dem aktuell von der Kamera (3) erfassten Bild mit einer mit der Bildinformation (IA) verknüpften und abgespeicherten Scrollinformation (IB) ansteuerbar ist, um derart einen bestimmten Hausbewohner (B) gezielt zur Anzeige zu bringen,
• die Bildinformationen (IA) zusätzlich jeweils mit zugeordneten Handlungsinformationen (HB) verknüpft und im Referenzspeicher (7) abgespeichert sind, wobei diese Handlungsinformationen (HB) festlegen, ob die Ansteuerung des Türöffners (21) automatisiert erfolgen soll oder ob das Anklingeln eines bestimmten Besuchers (A) zu unterdrücken ist oder ob lediglich ein diesbezüglicher Handlungsvorschlag an die betroffene Wohnungsstation (12, 18, 19) abzugeben ist, und die Handlungsinformationen (HB) zur automatischen Ansteuerung von bestimmten Gebäudesystemtechnik-Geräten führen.

2. Haus-Kommunikationssystem nach Anspruch 1, **dadurch gekennzeichnet, dass** die Wohnungsstationen (12, 18, 19) ein Telefonsystem-Interface (15) für die Kommunikation mit einem Telefonsystem aufweisen und die Handlungsinformationen (HB) im Falle der Abwesenheit des Hausbewohners (B) zum automatischen Einrichten einer Kommunikationsverbindung zwischen der Türstation (2) und einem Mobiltelefon (30) des Hausbewohners (B) führen.

3. Haus-Kommunikationssystem nach einem der vorstehenden Ansprüche, **dadurch gekennzeichnet, dass** die Bildverarbeitung der Kamera (3) neben der Gesichtserkennung auch die Gegenstandserkennung umfasst.

## Claims

1. Building communication system (1) having at least one door station (2), at least one door opener (21), a camera (3), including image processing, for capturing visitors (A), a reference memory (7) and a multiplicity of apartment stations (12, 18, 19), **characterized in that**
• the door station (2) has a building systems technology interface (10) for connection to building systems technology (22) via a building systems technology bus (23),
• image information (IA) relating to visitors (A) is stored in the reference memory (7),
• the door station (1) has an evaluation/processing/control unit (9), including an image comparison device (8), which is connected to the camera (3) and to the reference memory (7) and a scrolling display (4) with a scrollable graphical user interface, which display can be used to specifically select a particular building resident from a list (6) of all building residents (B),
• the links between particular items of image information (IA) and particular apartment stations (12, 18, 19) are stored in the reference memory (4),
• a coincidence evaluation between an image currently captured by the camera (3) and the image information (IA) from the reference memory (7) is carried out by means of the evaluation/processing/control unit (9),
• if sufficient correspondence between a particular item of image information (IA) and the image currently captured by the camera (3) is determined, the scrolling display (4) can be controlled with an item of scrolling information (IB) which is linked to the image information (IA) and is stored in order to specifically display a particular building resident (B) in this manner,
• the image information (IA) is additionally respectively linked to associated action information (HB) and is stored in the reference memory (7), wherein this action information (HB) stipulates whether the door opener (21) is intended to be controlled in an automated manner or whether the calling of a particular visitor (A) should be suppressed or whether only a relevant suggested action should be output to the affected apartment station (12, 18, 19), and the action information (HB) results in particular building systems technology devices being automatically controlled.

2. Building communication system according to Claim 1, **characterized in that** the apartment stations (12, 18, 19) have a telephone system interface (15) for communicating with a telephone system, and, in the absence of the building resident (B), the action information (HB) results in a communication connection being automatically set up between the door station (2) and a mobile telephone (30) belonging to the building resident (B).

3. Building communication system according to one of the preceding claims, **characterized in that** the image processing in the camera (3) also comprises object recognition in addition to facial recognition.

## Revendications

1. Système de communication résidentiel (1) comprenant au moins une station de porte (2), au moins une gâche électrique (21), une caméra (3) avec traitement d'images servant à capturer les visiteurs (A), une mémoire de référence (7) et une pluralité de stations de logement (12, 18, 19), **caractérisé en ce que**
* la station de porte (2) possède une interface de système domotique (10) destinée au raccordement à un système domotique (22) par le biais d'un bus de système domotique (23),
* des informations d'image (IA) de visiteurs (A) sont enregistrées dans la mémoire de référence (7),
* la station de porte (1) possède une unité d'interprétation/de traitement/de commande (9) reliée avec la caméra (3) et la mémoire de référence (7), y compris dispositif de comparaison d'images (8) et un écran défilant (4) avec interface utilisateur graphique à défilement, laquelle permet de sélectionner de manière ciblée un habitant de la résidence dans une liste (6) de tous les habitants de la résidence (B),
* les liaisons entre certaines informations d'image (IA) et certaines stations de logement (12, 18, 19) sont enregistrées dans la mémoire de référence (4),
* une interprétation de coïncidence entre une image actuellement capturée par la caméra (3) et les informations d'image (IA) de la mémoire de référence (7) est effectuée par l'unité d'interprétation/de traitement/de commande (9),
* en présence d'une concordance suffisante constatée entre une information d'image (IA) donnée et l'image actuellement capturée par la caméra (3), l'écran défilant (4) peut être commandé avec une information de défilement (IB) liée à l'information d'image (IA) et enregistrée avec celle-ci afin d'afficher ainsi de manière ciblée un habitant de la résidence (B) donné,
* les informations d'image (IA) sont en plus respectivement liées à des informations d'action (HB) associées et enregistrées dans la mémoire de référence (7), ces informations d'action (HB) définissant si la commande de la gâche électrique (21) doit être effectuée de manière automatisée ou si l'actionnement de la sonnette par certain un visiteur (A) doit être inhibé ou encore s'il faut uniquement délivrer à la station de logement (12, 18, 19) concernée une suggestion d'action se rapportant à celui-ci, et les informations d'action (HB) donnant lieu à une commande automatique de certains appareils du système domotique.

2. Système de communication résidentiel selon la revendication 1, **caractérisé en ce que** les stations de logement (12, 18, 19) possèdent une interface de système téléphonique (15) pour la communication avec un système téléphonique et les informations d'action (HB), en cas d'absence de l'habitant de la résidence (B), donnent lieu à l'établissement automatique d'une liaison de communication entre la station de porte (2) et un téléphone mobile (30) de l'habitant de la résidence (B).

3. Système de communication résidentiel selon l'une des revendications précédentes, **caractérisé en ce qu'**en plus de la reconnaissance faciale, le traitement d'image de la caméra (3) comprend également la reconnaissance d'objet.
